# EUROPEAN PATENT APPLICATION

(11) **EP 4 101 313 A1**
(43) Date of publication of application: **14.12.2022**
(21) Application number: 21751223.5
(22) Date of filing: 03.02.2021
(51) Int. Cl.: A23L 13/00, G06Q 30/02, G06Q 50/02

(54) **FISH-QUALITY DETERMINATION SYSTEM**

(30) Priority: 07.02.2020 JP 2020019296
(71) Applicant: DENTSU INC., Tokyo 105-7001 (JP)
(72) Inventor: SHIMURA, Kazuhiro, Tokyo 105-7001 (JP)
(74) Representative: Bardehle Pagenberg Partnerschaft mbB Patentanwälte Rechtsanwälte
(86) International application number: PCT/JP2021/003804
(87) International publication number: WO 2021/157579

(57) **Abstract**

A fish-quality determination system (1) analyzes, through machine learning, a relationship among image data taken of cross-sections of tails of fish, boat data indicating fishing boats that caught the fish, and quality data indicating quality of the fish. When having acquired, from a user device (3), image data of a cross-section of the tail of a fish subject to determination and boat data indicating a fishing boat that caught the fish, the system (1) uses, as an input, the image data of the cross-section of the tail of the fish subject to the determination and the boat data indicating the fishing boat that caught the fish that have been acquired so as to estimate and output quality of the fish subject to the determination on the basis of the analyzed relationship. The output quality of the fish subject to the determination is displayed on the user device (3).

## Description

### Technical Field

The present invention is related to a system for determining quality of fish (in particular, tuna).

### Background Art

Conventionally, techniques for evaluating freshness of seafood have been proposed (see, for example, Patent Literature 1). Further, conventionally, at wholesale fish markets and the like, quality of tuna is determined by looking at a cross-section of the tail of the tuna.

### Citation List

### Patent Literature

Patent Literature 1: Japanese Patent Laid-Open No. 2010-286262

### Summary of Invention

### Technical Problem

Determining quality of tuna from a cross-section of the tail of the tuna requires many years of experience. Unless people are quite experienced, it is difficult to determine the quality of tuna. For this reason, there is a demand for a system to be developed so that anyone (including those who are not experienced) is able to easily determine the quality of tuna.

Freshness of tuna has a large impact on the quality of tuna. Also, there are other elements having large impacts, such as fishing methods for catching the tuna, how to slaughter the tuna being caught (bleeding methods), and how the tuna is stored afterwards. However, there has conventionally been no system capable of determining the quality of tuna while taking also those elements (i.e., elements other than the freshness) into consideration.

An object of the present invention, which has been made in view of the problems described above, is to provide a fish quality determination system that makes it possible even for an inexperienced person to easily determine quality of fish and makes it possible to determine the quality of fish, while taking into consideration not only freshness of the fish, but also elements other than the freshness.

### Solution to Problem

A fish quality determination system of the present invention includes: a machine learning unit that analyzes, through machine learning, a relationship among image data taken of cross-sections of tails of fish, boat data indicating fishing boats that caught the fish, and quality data indicating quality of the fish; a data acquisition unit that acquires, from a user device, image data of a cross-section of a tail of a fish subject to determination and boat data indicating a fishing boat that caught the fish; a quality estimation unit that uses, as an input, the image data of the cross-section of the tail of the fish subject to the determination and the boat data indicating the fishing boat that caught the fish acquired by the data acquisition unit, so as to estimate and output quality of the fish subject to the determination, on a basis of the relationship analyzed by the machine learning unit; and a quality display unit that displays, on the user device, the quality of the fish subject to the determination output by the quality estimation unit.

In this configuration, when the image data of the cross-section of the tail of the fish subject to the determination and the boat data indicating the fishing boat that caught the fish are acquired from the user device, the quality of the fish subject to the determination is estimated by using the relationship analyzed by the machine learning (the relationship among the image data of the cross-sections of the tails of the fish, the boat data indicating the fishing boats that caught the fish, and the quality data indicating the quality of the fish), so as to be displayed on the user device. Consequently, it is possible, even for an inexperienced person, to easily determine the quality of the fish. In this situation, for the estimation of the quality of the fish, not only the image data of the cross-section of the tail of the fish, but also the boat data indicating the fishing boat that caught the fish is used. As a result of using the boat data in this manner, it is possible to determine the quality of the fish while taking into consideration not only freshness of the fish, but also the elements other than the freshness.

Further, the fish quality determination system of the present invention may be configured so that the machine learning unit analyzes, through machine learning, a relationship among the quality data of the fish, weight data indicating weights of the fish, and price data indicating prices of the fish, the data acquisition unit acquires, from the user device, weight data of the fish subject to the determination, the estimation unit uses, as an input, quality data of the fish subject to the determination estimated by the estimation unit and the weight data of the fish subject to the determination acquired by the data acquisition unit, so as to estimate and output a price of the fish subject to the determination, on a basis of the relationship analyzed by the machine learning unit, and the display unit displays, on the user device, the price of the fish subject to the determination output by the estimation unit.

In this configuration, when the weight data indicating the weight of the fish subject to the determination is acquired from the user device, the price of the fish subject to the determination is estimated by using the relationship analyzed by the machine learning (the relationship among the quality data of the fish, the weight data of the fish, and the price data indicating the prices of the fish), so as to be displayed on the user device. Consequently, it is possible to also determine the price of the fish, together with the quality of the fish.

Further, the fish quality determination system of the present invention may be configured so that the machine learning unit analyzes, through machine learning, a relationship among the quality data of the fish, weight data indicating weights of the fish, date data indicating dates on which the fish was caught, and price data indicating prices of the fish, the data acquisition unit acquires, from the user device, weight data of the fish subject to the determination and data of a date on which the fish subject to the determination was caught, the estimation unit uses, as an input, quality data of the fish subject to the determination estimated by the estimation unit, the weight data of the fish subject to the determination acquired by the data acquisition unit, and the data of the date on which the fish subject to the determination was caught, so as to estimate and output a price of the fish subject to the determination, on a basis of the relationship analyzed by the machine learning unit, and the display unit displays, on the user device, the price of the fish subject to the determination output by the estimation unit.

In this configuration, when the weight data indicating the weight of the fish subject to the determination and the data of the date on which the fish subject to the determination was caught are acquired from the user device, the price of the fish subject to the determination is estimated by using the relationship analyzed by the machine learning (the relationship among the quality data of the fish, the weight data of the fish, the data of the dates on which the fish was caught, and the price data indicating the prices of the fish), so as to be displayed on the user device. Consequently, it is possible to also determine the price of the fish, together with the quality of the fish.

A method of the present invention is a method implemented by a fish quality determination system, and the method includes: a step of analyzing, through machine learning, a relationship among image data taken of cross-sections of tails of fish, boat data indicating fishing boats that caught the fish, and quality data indicating quality of the fish; a step of acquiring, from a user device, image data of a cross-section of a tail of a fish subject to determination and boat data indicating a fishing boat that caught the fish; a step of using, as an input, the image data of the cross-section of the tail of the fish subject to the determination and the boat data indicating the fishing boat that caught the fish that have been acquired, so as to estimate and output quality of the fish subject to the determination, on a basis of the analyzed relationship; and a step of displaying, on the user device, the output quality of the fish subject to the determination.

Similarly to the system described above, according to this method also, when the image data of the cross-section of the tail of the fish subject to the determination and the boat data indicating the fishing boat that caught the fish are acquired from the user device, the quality of the fish subject to the determination is estimated by using the relationship analyzed by the machine learning (the relationship among the image data of the cross-sections of the tails of the fish, the boat data indicating the fishing boats that caught the fish, and the quality data indicating the quality of the fish), so as to be displayed on the user device. Consequently, it is possible, even for an inexperienced person, to easily determine the quality of the fish. In this situation, for the estimation of the quality of the fish, not only the image data of the cross-section of the tail of the fish, but also the boat data indicating the fishing boat that caught the fish are used. Consequently, it is possible to determine the quality of the fish while taking into consideration not only freshness of the fish, but also the elements other than the freshness.

A program of the present invention is related to a method implemented by a fish quality determination system, and the method includes: a step of analyzing, through machine learning, a relationship among image data taken of cross-sections of tails of fish, boat data indicating fishing boats that caught the fish, and quality data indicating quality of the fish; a step of acquiring, from a user device, image data of a cross-section of a tail of a fish subject to determination and boat data indicating a fishing boat that caught the fish; a step of using, as an input, the image data of the cross-section of the tail of the fish subject to the determination and the boat data indicating the fishing boat that caught the fish that have been acquired, so as to estimate and output quality of the fish subject to the determination, on a basis of the analyzed relationship; and a step of displaying, on the user device, the output quality of the fish subject to the determination.

Similarly to the system described above, with the use of this program also, when the image data of the cross-section of the tail of the fish subject to the determination and the boat data indicating the fishing boat that caught the fish are acquired, the quality of the fish subject to the determination is estimated by using the relationship analyzed by the machine learning (the relationship among the image data of the cross-sections of the tails of the fish, the boat data indicating the fishing boats that caught the fish, and the quality data indicating the quality of the fish), so as to be displayed on the user device. Consequently, it is possible, even for an inexperienced person, to easily determine the quality of the fish. In this situation, for the estimation of the quality of the fish, not only the image data of the cross-section of the tail of the fish, but also the boat data indicating the fishing boat that caught the fish are used. Consequently, it is possible to determine the quality of the fish while taking into consideration not only freshness of the fish, but also the elements other than the freshness.

### Advantageous Effects of Invention

The present invention makes it possible, even for an inexperienced person, to easily determine the quality of the fish. In addition, it is also possible to determine the quality of the fish while taking into consideration the elements other than the freshness of the fish.

### Brief Description of Drawings

[Figure 1] Figure 1 is a block diagram of a quality determination system according to an embodiment of the present invention.
[Figure 2] Figure 2 shows an example of image data of a cross-section of the tail of a fish (tuna) according to the embodiment of the present invention.
[Figure 3] Figure 3 shows an example of boat data according to the embodiment of the present invention.
[Figure 4] Figure 4 shows an example of a position alignment marker according to the embodiment of the present invention.
[Figure 5] Figure 5 is a sequence chart for explaining an operation of a quality determination system according to the embodiment of the present invention.
[Figure 6] Figure 6 is a block diagram of a quality determination system according to another embodiment.
[Figure 7] Figure 7 is a sequence chart for explaining an operation of a quality determination system according to the other embodiment.

### Description of Embodiments

In the following sections, a fish quality determination system according to embodiments of the present invention will be explained, with reference to the drawings. In the present embodiments, examples of a quality determination system for tuna will be explained.

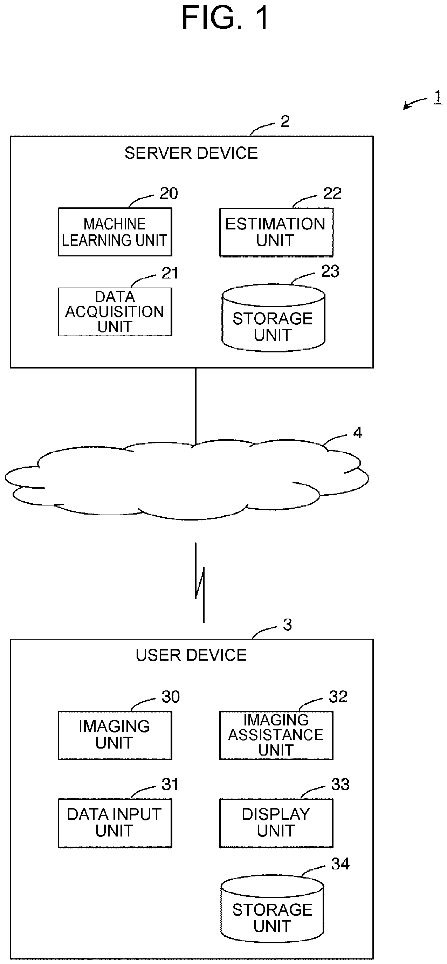

A configuration of a quality determination system according to an embodiment of the present invention will be explained, with reference to drawings. Figure 1 is a block diagram showing the configuration of the quality determination system according to the present embodiment. As shown in Figure 1, a quality determination system 1 is configured with a server device 2 and a user device 3. The server device 2 and the user device 3 are connected so as to be able to communicate with each other via a network 4. For example, the server device 2 is a cloud server or the like owned by a provider of a quality determination service. The user device 3 is a smartphone or the like owned by a user of the quality determination service.

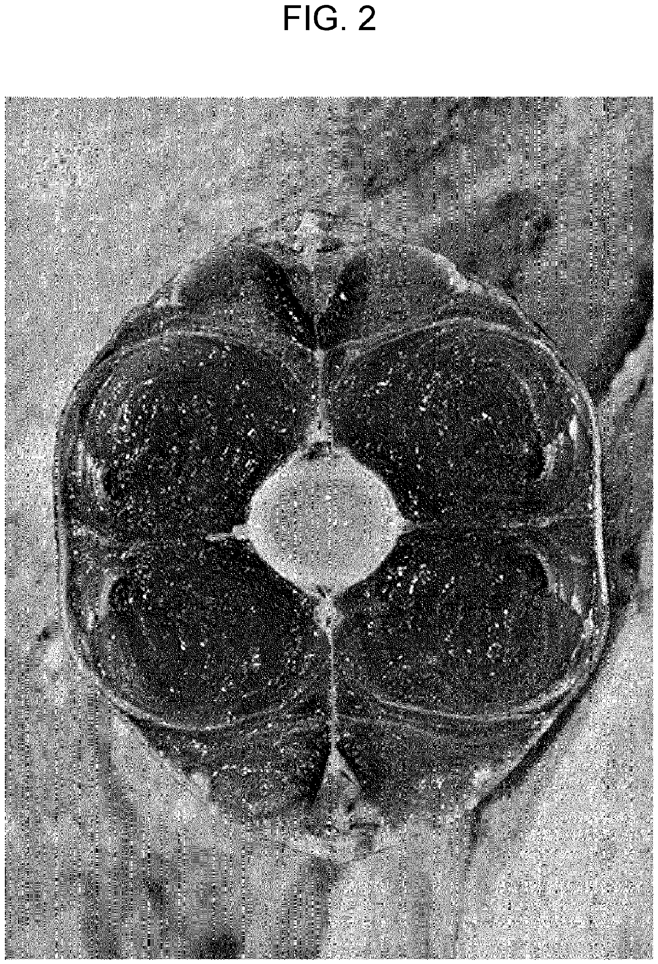

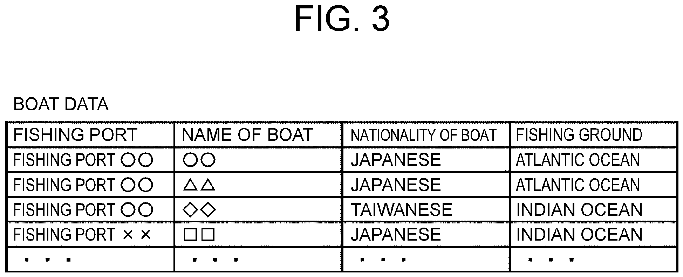

As shown in Figure 1, the server device 2 includes a machine learning unit 20, a data acquisition unit 21, an estimation unit 22, and a storage unit 23. The machine learning unit 20 analyzes, through machine learning, a relationship among image data (see Figure 2) taken of cross-sections of the tails of tuna, boat data (see Figure 3) indicating fishing boats that caught the tuna, and quality data indicating quality of the tuna. To this machine learning process, an arbitrary method may be applied, such as deep learning using a neural network.

For instance, when a neural network is used, the neural network is configured so that image data of a cross-section of the tail of tuna and boat data of the fishing boat that caught the tuna are input to an input layer and so that quality data of the tuna is output from an output layer. Further, through supervised learning that uses analysis-purpose data (supervisor data) keeping data input to the input layer in association with data output from the output layer, a weight coefficient between neurons in the neural network is optimized. As the supervisor data of the quality, it is acceptable to use data of quality of tuna (e.g., evaluation grades S, A, B, C, etc.) determined by an experienced person from cross-sections of the tails of the tuna.

Further, the machine learning unit 20 analyzes, through machine learning, a relationship among the quality data of the tuna, weight data indicating the weights of the tuna, and price data indicating prices of the tuna. To this machine learning process also, an arbitrary method may be applied, such as deep learning using a neural network.

For instance, when a neural network is used, the neural network is configured so that quality data of tuna and weight data of the tuna are input to an input layer and so that price data of the tuna is output from an output layer. Further, through supervised learning that uses analysis-purpose data (supervisor data) keeping data input to the input layer in association with data output from the output layer, a weight coefficient between the neurons in the neural network is optimized. As the supervisor data of the prices, it is acceptable to use data of contract prices (e.g., prices per kilogram) of the tuna in a market.

The data acquisition unit 21 acquires, from the user device 3, image data of a cross-section of the tail of tuna subject to determination and boat data indicating the fishing boat that caught the tuna. On the basis of the relationships analyzed by the machine learning unit 20, the estimation unit 22 estimates and outputs quality of the tuna subject to the determination, while using, as inputs, the image data of the cross-section of the tail of the tuna subject to the determination and the boat data indicating the fishing boat that caught the tuna acquired by the data acquisition unit 21.

For instance, in an example of the abovementioned neural network, the quality of the tuna subject to the determination is estimated by inputting the image data of the cross-section of the tail of the tuna subject to the determination and the boat data indicating the fishing boat that caught the tuna to the input layer and estimating the quality of the tuna subject to the determination so that an output is output from the output layer.

Further, the data acquisition unit 21 acquires, from the user device 3, weight data of the tuna subject to the determination. On the basis of the relationships analyzed by the machine learning unit 20, the estimation unit 22 estimates and outputs a price of the tuna subject to the determination by using, as inputs, the quality data of the tuna subject to the determination estimated by the estimation unit 22 and the weight data of the tuna subject to the determination acquired by the data acquisition unit 21.

For instance, in an example of the abovementioned neural network, the price of the tuna subject to the determination is estimated by inputting the quality data of the tuna subject to the determination and the weight data of the tuna to the input layer and estimating the price of the tuna subject to the determination so that an output is output from the output layer.

The storage unit 23 stores therein the image data, the boat data, and the weight data acquired from the user device 3. Further, the storage unit 23 stores therein the quality data and the price data of the tuna output by the estimation unit 22. Furthermore, the storage unit 23 stores therein the relationship among the image data, the boat data, and the quality data of the tuna and the relationship among the quality data, the weight data, and the price data of the tuna that have been analyzed by the machine learning.

As shown in Figure 1, the user device 3 includes an imaging unit 30, a data input unit 31, an imaging assistance unit 32, a display unit 33, and a storage unit 34. The imaging unit 30 is realized by a camera function of the user device 3 and generates the image data of the cross-section of the tail of the tuna (see Figure 2), by imaging the cross-section of the tail of the tuna. Further, the generated image data of the cross-section of the tail of the tuna may be kept in association with data of the date of imaging.

The data input unit 31 has a function of inputting various types of data. By the data input unit 31, the boat data of the fishing boat that caught the tuna subject to the determination is input. For example, the boat data includes data of the fishing port, the name of the boat, the nationality of the boat, and the fishing ground (see Figure 3). Further, by the data input unit 31, the weight data of the tuna subject to the determination is input.

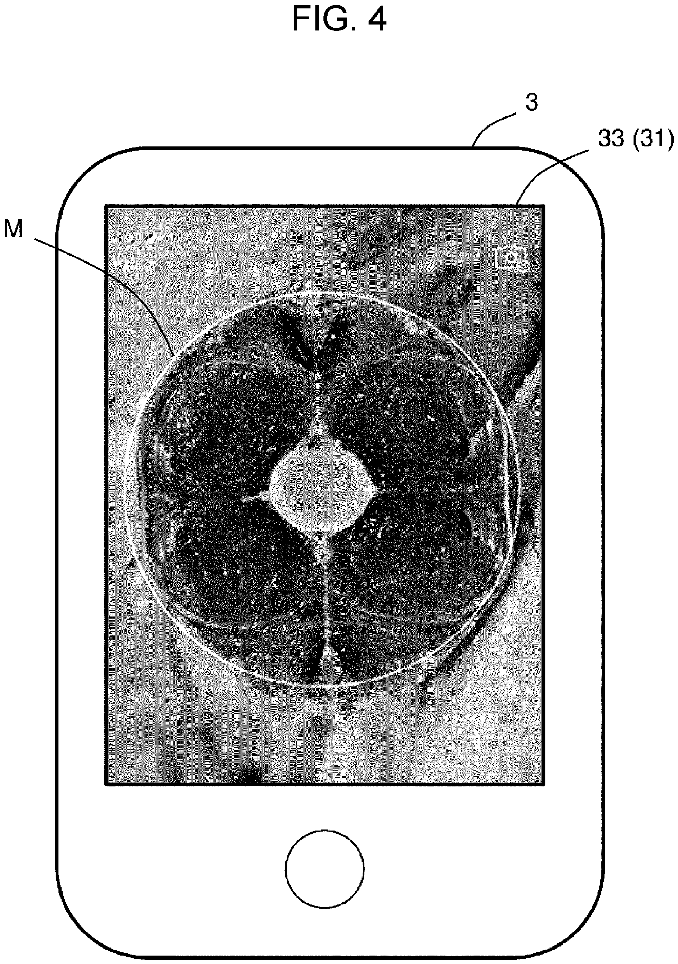

When the user device 3 images the cross-section of the tail of the tuna subject to the determination, the imaging assistance unit 32 displays, on the display unit 33 of the user device 3, a marker M used for a position alignment of the cross-section of the tail of the tuna subject to the determination. The shape of the marker M may be substantially circular, for example. The position alignment is performed so that the cross-section of the tail of the tuna subject to the determination fits inside the substantially circular marker M (see Figure 4). As the image data of the cross-section of the tail of the tuna subject to the determination, the data acquisition unit 21 acquires the image data on the inside of the substantially circular marker M.

The display unit 33 has a function of displaying various types of data. On the display unit 33, the quality of the tuna subject to the determination output by the estimation unit 22 is displayed. Further, on the display unit 33, the price of the tuna subject to the determination output by the estimation unit 22 is displayed. In an example, when the display unit 33 has a touch panel function, the display unit 33 may also serve as the data input unit 31.

The storage unit 34 stores therein the image data, the boat data, and the weight data of the tuna that are input from the user device 3. Further, the storage unit 34 stores therein the quality data and the price data of the tuna that are output from the server device 2.

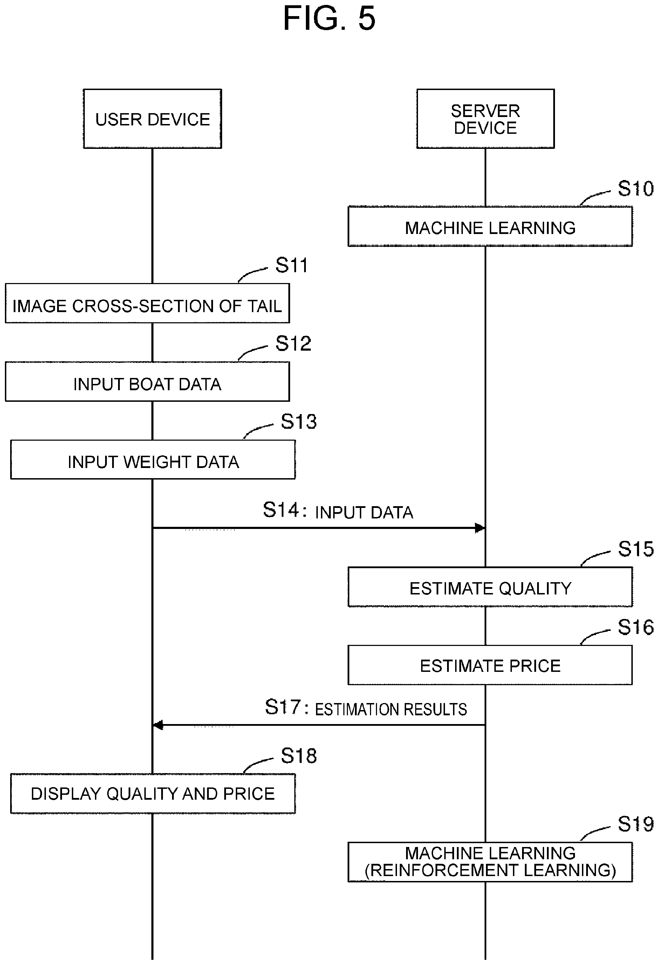

Regarding the quality determination system 1 configured as described above, an operation thereof will be explained with reference to the sequence chart in Figure 5.

As shown in Figure 5, in the quality determination system 1 according to the present embodiment, the machine learning unit 20 of the server device 2 analyzes, through machine learning in advance, the relationship among the image data of the cross-sections of the tails of tuna, the boat data indicating the fishing boats that caught the tuna, and the quality data indicating the quality of the tuna (S10). Also, the machine learning unit 20 analyzes, through machine learning in advance, the relationship among the quality data of the tuna, the weight data indicating the weights of the tuna, and the price data indicating the prices of the tuna (S10).

After that, when the user device 3 takes the image data of the cross-section of the tail of tuna subject to determination (S11), also receives an input of the boat data indicating the fishing boat that caught the tuna (S12) and further receives an input of the weight data of the tuna (S13), these pieces of data are transmitted from the user device 3 to the server device 2 (S14). On the basis of the relationship analyzed by the machine learning unit 20, the estimation unit 22 of the server device 2 estimates and outputs the quality of the tuna subject to the determination by using, as the inputs, the image data of the cross-section of the tail of the tuna subject to the determination and the boat data indicating the fishing boat that caught the tuna (S15). Further, on the basis of the relationship analyzed by the machine learning unit 20, the estimation unit 22 estimates and outputs a price of the tuna subject to the determination by using, as the inputs, the quality data of the tuna subject to the determination and the weight data of the tuna (S16).

The estimation results (the quality and the price of the tuna) output by the estimation unit 22 of the server device 2 are transmitted to the user device 3 (S17), so as to be displayed on the display unit 33 of the user device 3 (S18). After that, the machine learning unit 20 of the server device 2 performs reinforcement learning of the relationships (for example, the weight coefficient between the neurons in the neural network is optimized) by using the estimation results (the quality and the price of the tuna) output by the estimation unit 22 as supervisor data (S19).

In the quality determination system 1 according to the present embodiment configured as described above, when the image data (see Figure 2) of the cross-section of the tail of the tuna subject to the determination and the boat data (Figure 3) indicating the fishing boat that caught the tuna are acquired from the user device 3, the quality of the tuna subject to the determination is estimated by using the relationship analyzed by the machine learning (the relationship among the image data of the cross-sections of the tails of the tuna, the boat data indicating the fishing boats that caught the tuna, and the quality data indicating the quality of the tuna), so as to be displayed on the user device 3. Consequently, it is possible, even for an inexperienced person, to easily determine the quality of the tuna. In this situation, for the estimation of the quality of the tuna, not only the image data of the cross-section of the tail of the tuna, but also the boat data indicating the fishing boat that caught the tuna is used. Because the boat data is used in this manner, it is possible to determine the quality of the tuna while taking into consideration not only the freshness of the tuna, but also the elements other than the freshness (e.g., the fishing method for catching tuna, how to slaughter the tuna being caught, and how the tuna is stored afterwards).

In addition, according to the present embodiment, when the weight data indicating the weight of the tuna subject to the determination is acquired from the user device 3, the price of the tuna subject to the determination is estimated by using the relationship analyzed by the machine learning (the relationship among the quality data of the tuna, the weight data of the tuna, and the price data indicating the prices of the tuna), so as to be displayed on the user device 3. Consequently, it is possible to determine the price of the tuna, together with the quality of the tuna.

Furthermore, according to the present embodiment, when the user device 3 images the cross-section of the tail of the tuna subject to the determination, the display unit 33 of the user device 3 displays the substantially circular marker (see Figure 4) for performing the position alignment on the cross-section of the tail of the tuna subject to the determination. In this situation, the position alignment is performed so that the cross-section of the tail of the tuna subject to the determination fits the inside of the substantially circular marker. The image data on the inside of the substantially circular marker is used as the image data of the cross-section of the tail of the tuna subject to the determination (the data to be input to the estimation unit 22). Consequently, it is possible to prevent unnecessary image data (image data other than that of the cross-section of the tail) from being included in the image data of the cross-section of the tail of the tuna subject to the determination. The precision level of the estimation of the quality is thus enhanced.

The embodiment of the present invention has thus been explained through the examples. However, the possible scope of the present invention is not limited to these examples. It is possible to make changes and modifications in accordance with various purposes within the scope set forth in the claims.

For example, the machine learning unit 20 may analyze, through machine learning, a relationship among the quality data of the tuna, the weight data indicating the weights of the tuna, date data indicating the dates on which the tuna was caught, and the price data indicating the prices of the tuna. To this machine learning process also, an arbitrary method may be applied, such as deep learning using a neural network.

For instance, when a neural network is used, the neural network is configured so that quality data of tuna, weight data of the tuna, and data of the date on which the tuna was caught are input to an input layer and so that price data of the tuna is output from an output layer. Further, through supervised learning that uses analysis-purpose data (supervisor data) keeping data input to the input layer in association with data output from the output layer, a weight coefficient between the neurons in the neural network is optimized. As the supervisor data of the prices, it is acceptable to use data of contract prices (e.g., prices per kilogram) of the tuna in a market.

In this situation, when weight data indicating the weight of tuna subject to determination and data of the date on which the tuna subject to the determination was caught are acquired from the user device 3, a price of the tuna subject to the determination is estimated by using the relationship analyzed by the machine learning (the relationship among the quality data of the tuna, the weight data of the tuna, the data of the dates on which the tuna was caught, and the price data indicating the prices of the tuna), so as to be displayed on the user device 3. In this manner, it is possible to determine the price of the tuna, together with the quality of the tuna.

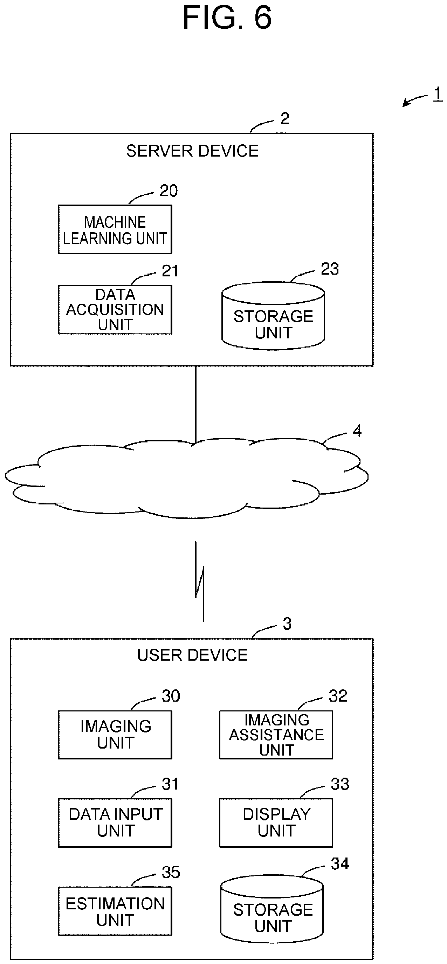

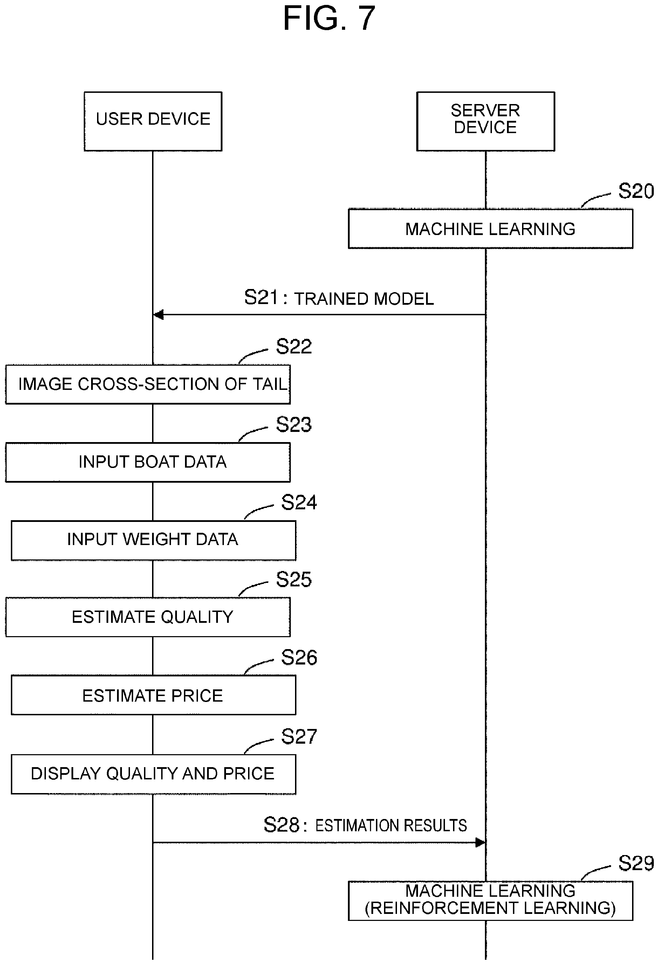

Further, in the explanations above, the example was explained in which the server device 2 includes the estimation unit 22; however, as shown in Figure 6, the user device 3 may include an estimation unit 35. For example, functions of the estimation unit 35 of the user device 3 may be realized by a program stored in the storage unit 34. In that situation, as shown in Figure 7, when the server device 2 has performed an analysis through machine learning (S20), the relationship (a trained model) acquired through the analysis is transmitted from the server device 2 to a user terminal (S21) .

The user device 3 takes image data of a cross-section of the tail of the tuna subject to the determination (S22), also receives an input of boat data indicating the fishing boat that caught the tuna (S23), and further receives an input of weight data of the tuna (S24). After that, on the basis of the relationship (the trained model) transmitted from the server device 2, the estimation unit 35 of the user device 3 estimates and outputs the quality of the tuna subject to the determination by using, as the inputs, the image data of the cross-section of the tail of the tuna subject to the determination and the boat data indicating the fishing boat that caught the tuna (S25). Also, the estimation unit 35 estimates and outputs a price of the tuna subject to the determination by using, as the inputs, the quality data of the tuna subject to the determination and the weight data of the tuna (S26).

After that, the estimation results (the quality and the price of the tuna) output by the estimation unit 35 of the user device 3 are displayed on the display unit 33 of the user device 3 (S27). In this situation, the estimation results (the quality and the price of the tuna) output by the estimation unit 35 of the user device 3 are transmitted to the server device 2 together with the data (the image data, the boat data, and the weight data of the tuna) input from the user device 3 (S28). By using the transmitted information as supervisor data, reinforcement learning of the relationships (the trained model) is performed (e.g., a weight coefficient between the neurons in the neural network is optimized) (S29).

### Industrial Applicability

As explained above, the fish quality determination system according to the present invention makes it possible, even for an inexperienced person, to easily determine the quality of the fish. In addition, an advantageous effect is achieved where it is possible to determine the quality of the fish while taking into consideration the elements other than the freshness of the fish. The system is therefore useful as a quality determination system for tuna or the like.

### Reference Signs List

- 1: QUALITY DETERMINATION SYSTEM
- 2: SERVER DEVICE
- 3: USER DEVICE
- 4: NETWORK
- 20: MACHINE LEARNING UNIT
- 21: DATA ACQUISITION UNIT
- 22: ESTIMATION UNIT
- 23: STORAGE UNIT
- 30: IMAGING UNIT
- 31: DATA INPUT UNIT
- 32: IMAGING ASSISTANCE UNIT
- 33: DISPLAY UNIT
- 34: STORAGE UNIT
- 35: ESTIMATION UNIT

## Claims

1. A fish quality determination system comprising:
a machine learning unit that analyzes, through machine learning, a relationship among image data taken of cross-sections of tails of fish, boat data indicating fishing boats that caught the fish, and quality data indicating quality of the fish;
a data acquisition unit that acquires, from a user device, image data of a cross-section of a tail of a fish subject to determination and boat data indicating a fishing boat that caught the fish;
an estimation unit that uses, as an input, the image data of the cross-section of the tail of the fish subject to the determination and the boat data indicating the fishing boat that caught the fish acquired by the data acquisition unit, so as to estimate and output quality of the fish subject to the determination, on a basis of the relationship analyzed by the machine learning unit; and
a display unit that displays, on the user device, the quality of the fish subject to the determination output by the estimation unit.

2. The fish quality determination system according to claim 1, wherein
the machine learning unit analyzes, through machine learning, a relationship among the quality data of the fish, weight data indicating weights of the fish, and price data indicating prices of the fish,
the data acquisition unit acquires, from the user device, weight data of the fish subject to the determination,
the estimation unit uses, as an input, the quality data of the fish subject to the determination estimated by the estimation unit and the weight data of the fish subject to the determination acquired by the data acquisition unit, so as to estimate and output a price of the fish subject to the determination, on a basis of the relationship analyzed by the machine learning unit, and
the display unit displays, on the user device, the price of the fish subject to the determination output by the estimation unit.

3. The fish quality determination system according to claim 1, wherein
the machine learning unit analyzes, through machine learning, a relationship among the quality data of the fish, weight data indicating weights of the fish, date data indicating dates on which the fish was caught, and price data indicating prices of the fish,
the data acquisition unit acquires, from the user device, weight data of the fish subject to the determination and data of a date on which the fish subject to the determination was caught,
the estimation unit uses, as an input, the quality data of the fish subject to the determination estimated by the estimation unit, the weight data of the fish subject to the determination acquired by the data acquisition unit, and the data of the date on which the fish subject to the determination was caught, so as to estimate and output a price of the fish subject to the determination, on a basis of the relationship analyzed by the machine learning unit, and
the display unit displays, on the user device, the price of the fish subject to the determination output by the estimation unit.

4. A method implemented by a fish quality determination system, the method comprising:
a step of analyzing, through machine learning, a relationship among image data taken of cross-sections of tails of fish, boat data indicating fishing boats that caught the fish, and quality data indicating quality of the fish;
a step of acquiring, from a user device, image data of a cross-section of a tail of a fish subject to determination and boat data indicating a fishing boat that caught the fish;
a step of using, as an input, the image data of the cross-section of the tail of the fish subject to the determination and the boat data indicating the fishing boat that caught the fish that have been acquired, so as to estimate and output quality of the fish subject to the determination, on a basis of the analyzed relationship; and
a step of displaying, on the user device, the output quality of the fish subject to the determination.

5. A program executed by a user device, wherein
a server device capable of communicating with the user device includes a machine learning unit that analyzes, through machine learning, a relationship among image data taken of cross-sections of tails of fish, boat data indicating fishing boats that caught the fish, and quality data indicating quality of the fish,
the user device has stored therein the relationship analyzed by the machine learning unit and transmitted thereto from the server device, and
the program causes the user device to execute:
a process of receiving an input of image data of a cross-section of a tail of a fish subject to determination and boat data indicating a fishing boat that caught the fish;
a process of using, as an input, the image data of the cross-section of the tail of the fish subject to the determination and the boat data indicating the fishing boat that caught the fish, so as to estimate and output quality of the fish subject to the determination on a basis of the relationship analyzed by the machine learning unit; and
a process of displaying the output quality of the fish subject to the determination.
